# EUROPEAN PATENT SPECIFICATION

(11) **EP 3 189 442 B1**
(45) Date of publication and mention of the grant of the patent: **31.10.2018**
(21) Application number: 15763748.9
(22) Date of filing: 02.09.2015
(51) Int. Cl.: G06F 13/42, G06F 13/28

(54) **MULTI-CHANNEL AUDIO COMMUNICATION IN A SERIAL LOW-POWER INTER-CHIP MEDIA BUS (SLIMBUS) SYSTEM**
MEHRKANALIGE AUDIOKOMMUNIKATION IN EINEM SERIELLEN INTERCHIP-MEDIENBUS (SLIMBUS)-SYSTEM MIT NIEDRIGER LEISTUNG
COMMUNICATION AUDIO MULTICANAL DANS UN SYSTÈME DE BUS DE MÉDIA INTERPUCE SÉRIE BASSE PUISSANCE (SLIMBUS)

(30) Priority: 03.09.2014 US 201462045235 P; 01.09.2015 US 201514842451
(43) Date of publication of application: 12.07.2017
(73) Proprietor: Qualcomm Incorporated, San Diego, CA 92121-1714 (US)
(72) Inventor: AMARILIO, Lior, San Diego, California 92121 (US); BALATSOS, Aris, San Diego, California 92121 (US)
(74) Representative: Tomkins & Co
(86) International application number: PCT/US2015/048111
(87) International publication number: WO 2016/036837

(56) References cited:
- EP-A1- 2 544 096
- US-A1- 2007 011 364
- BACKMAN JUHA ET AL: "Slimbus: An Audio, Data And Control Interface For Mobile Devices", CONFERENCE: 29TH INTERNATIONAL CONFERENCE: AUDIO FOR MOBILE AND HANDHELD DEVICES; SEPTEMBER 2006, AES, 60 EAST 42ND STREET, ROOM 2520 NEW YORK 10165-2520, USA, 1 September 2006 (2006-09-01), XP040507958,

## Description

### BACKGROUND

### I. Field of the Disclosure

The technology of the disclosure relates generally to distributing audio.

### II. Background

Mobile communication devices have become increasingly common in current society. The prevalence of these mobile communication devices is driven in part by the many functions that are now enabled on such devices. Increased processing capabilities in such devices means that mobile communication devices have evolved from pure communication tools into sophisticated mobile entertainment centers, thus enabling enhanced user experiences.

Despite all the technological advancements, audio remains a fundamental feature of the mobile communication devices. The mobile communication devices commonly include a microphone(s) and speakers to support such applications as stereo music playback, hands-free voice calling, and music docking systems. Since a mobile communication device is capable of supporting multiple audio sink devices (e.g., left and right speakers of a stereo system) simultaneously, it may be desired to allow a microprocessor or other control device in the mobile communication device to communicate audio data to the multiple audio sink devices over a common communication bus.

On September 28, 2012, the MIPI® Alliance published the specification for Serial Low-power Inter-chip Media Bus (SLIMbus®), version 1.1. SLIMbus® is designed to support audio communications among a plurality of SLIMbus® devices in the mobile communication device over a time division multiplexed (TDM) bus. The plurality of SLIMbus® devices may include application processors, storage media, modems, microphones, speakers, and so on. The TDM bus can support a plurality of data channels. Each of the plurality of data channels can be configured to connect a single pair of SLIMbus® devices on the TDM bus for audio communications. According to the SLIMbus® specification version 1.1, a SLIMbus® device may include one or more ports, each configured to enable audio data connection to a signal data channel. In this regard, to play stereo audio from an audio source (e.g., an application processor, a storage medium, and/or an audio codec) to a left speaker and a right speaker in the mobile communication device, the audio source must support two data channels using two ports (i.e., the left speaker uses a first data channel through a first port and the right speaker uses a second data channel through a second port). Since each port consumes a full direct memory access (DMA) pipe, two DMA pipes are required to play the stereo audio in the mobile communication device. As a result, the mobile communication device may require more storage and/or communication bandwidth to play the stereo audio, thus leading to increased costs and power consumption. This situation is exacerbated when there are more than two audio channels such as 5.1 or 6.1 surround sound.

"Slimbus: An Audio, Data and Control Interface for Mobile Devices", 29th International Conference: Audio for Mobile and Handheld devices, September 2006 describes the SLIMbus inter-chip interface specification. European Patent Application Publication No. 2 544 096 relates to an apparatus and method of Universal Serial Bus, USB, communication.

### SUMMARY OF THE DISCLOSURE

The present invention relates to an audio source, an audio sink, a method of controlling an audio source and a method of controlling an audio sink, as defined in the appended claims.

Aspects disclosed in the detailed description include multi-channel audio communication in a Serial Low-power Inter-chip Media Bus (SLIMbus) system. In this regard, in one aspect, a multi-channel output port is provided in a SLIMbus system. The multi-channel output port receives an audio stream from an audio source (e.g., a storage medium) via a direct memory access (DMA) pipe and distributes the audio stream to multiple receiving ports (e.g., speakers) over multiple data channels, all connected to the single multi-channel output port. In another aspect, a multi-channel
input port is provided in a SLIMbus system. The multi-channel input port connects to multiple data channels from multiple distributing ports (e.g., microphones). By providing the multi-channel output port and/or the multi-channel input port in a SLIMbus system, it is possible to support multiple data channels with a single DMA pipe, thus improving implementation flexibilities and efficiencies of the SLIMbus system. Furthermore, it is possible to ease storage and communication bandwidth requirements for the SLIMbus system to reduce cost and power consumption.

In this regard, in one aspect, an audio source is provided. The audio source includes a multi-channel output port configured to be coupled to a time division multiplex (TDM) bus. The multi-channel output port is also configured to connect to at least two data channels carried by the TDM bus.

In another aspect, an audio sink is provided. The audio sink includes a multi-channel input port configured to be coupled to a TDM bus. The multi-channel input port is also configured to connect to at least two data channels carried by the TDM bus.

In another aspect, a method of controlling an audio source is provided. The method includes connecting a multi-channel output port to at least two data channels in a TDM bus. The method also includes receiving audio data at the multi-channel output port. The audio data includes multiple audio channels at the multi-channel output port. The method also includes transmitting the multiple audio channels through the at least two data channels in the TDM bus from the multi-channel output port.

In another aspect, a method of controlling an audio sink is provided. The method includes connecting a multi-channel input port to at least two data channels in a TDM bus. The method also includes receiving multiple audio channels through the at least two data channels in the TDM bus at the multi-channel input port. The method also includes interleaving audio data in the multi-channel input port.

### BRIEF DESCRIPTION OF THE FIGURES

Figure 1 is a schematic diagram illustrating device communications in an exemplary Serial Low-power Inter-chip Media Bus (SLIMbus) system according to the MIPI® Alliance SLIMbus® specification version 1.1, published on September 28, 2012 (SLIMbus specification);
Figure 2A is a simplified schematic diagram of an exemplary electronic device configured to play stereo audio from a storage device to a left speaker and a right speaker;
Figure 2B is a schematic diagram of an exemplary conventional SLIMbus system configured according to the SLIMbus specification to support stereo audio playback in the electronic device of Figure 2A;
Figure 3 is a schematic diagram of an exemplary SLIMbus system configured to support the stereo audio playback in an electronic device by configuring at least one port among a plurality of ports in an audio controller to function as a multi-channel output port;
Figure 4 is a schematic diagram of an exemplary SLIMbus system in which at least one port among a plurality of ports is configured to function as a multi-channel output port to support a plurality of data channels;
Figure 5 is a schematic diagram of an exemplary SLIMbus system in which at least one port among a plurality of ports is configured to function as a multi-channel input port to support a plurality of data channels;
Figure 6 is a schematic diagram of an exemplary SLIMbus system including a multi-channel output port and a multi-channel input port; and
Figure 7 is a block diagram of an exemplary processor-based system that can employ the SLIMbus systems of Figures 3-6.

### DETAILED DESCRIPTION

With reference now to the drawing figures, several exemplary aspects of the present disclosure are described. The word "exemplary" is used herein to mean "serving as an example, instance, or illustration." Any aspect described herein as "exemplary" is not necessarily to be construed as preferred or advantageous over other aspects.

Aspects disclosed in the detailed description include multi-channel audio communication in a Serial Low-power Inter-chip Media Bus (SLIMbus) system. In this regard, in one aspect, a multi-channel output port is provided in a SLIMbus system. The multi-channel output port receives an audio stream from an audio source (e.g., a storage medium) via a direct memory access (DMA) pipe and distributes the audio stream to multiple receiving ports (e.g., speakers) over multiple data channels, all connected to the single multi-channel output port. In another aspect, a multi-channel input port is provided in a SLIMbus system. The multi-channel input port connects to multiple data channels from multiple distributing ports (e.g., microphones). By providing the multi-channel output port and/or the multi-channel input port in a SLIMbus system, it is possible to support multiple data channels with a single DMA pipe, thus improving implementation flexibilities and efficiencies of the SLIMbus system. Furthermore, it is possible to ease storage and communication bandwidth requirements for the SLIMbus system to reduce cost and power consumption.

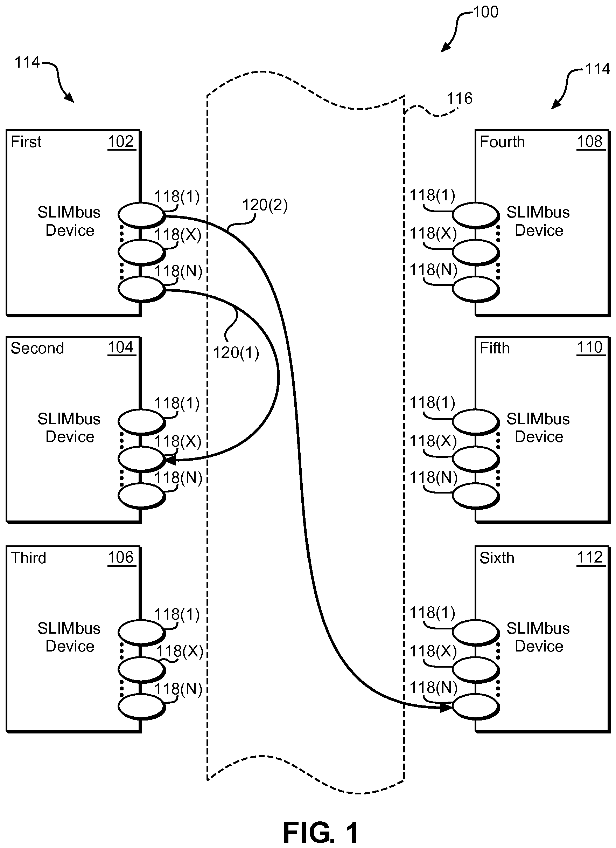

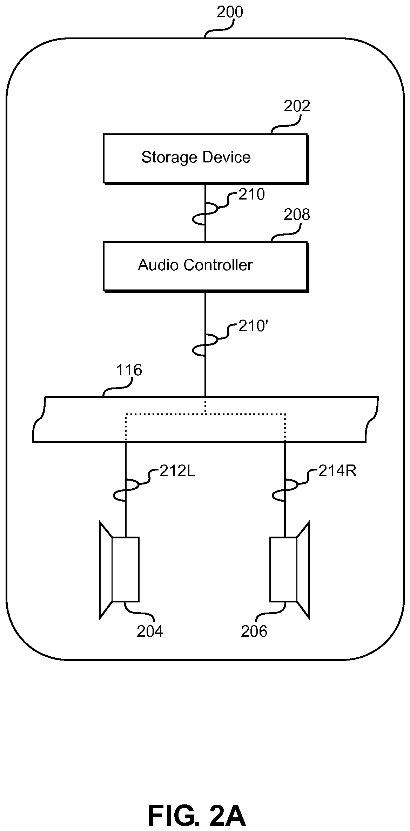

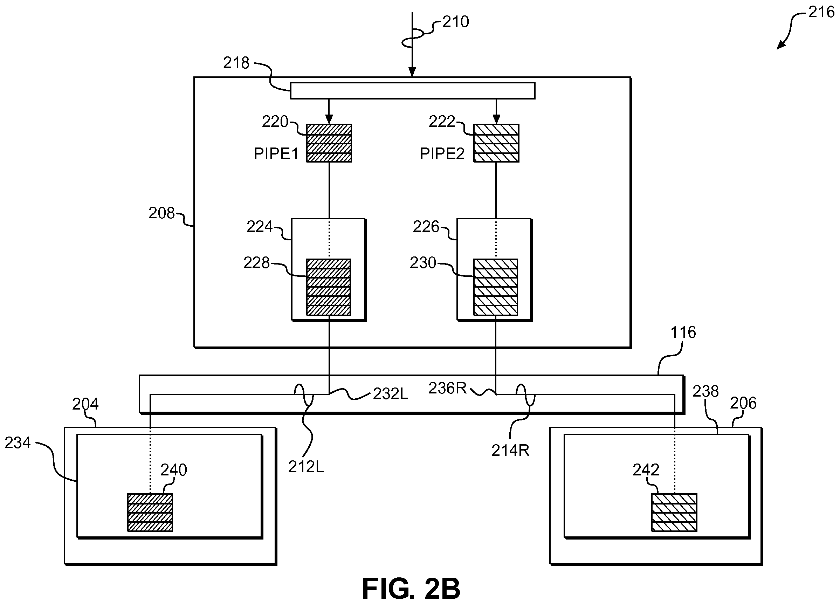

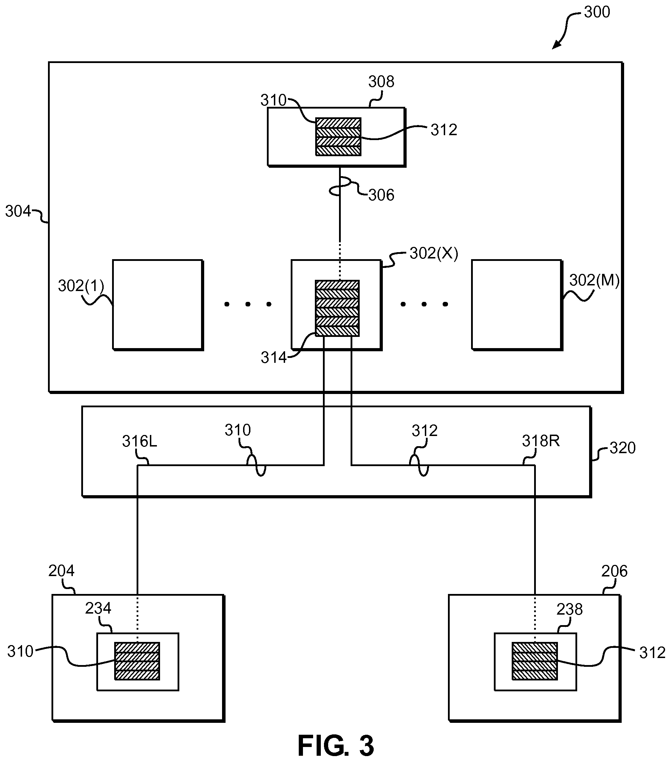

Before discussing exemplary aspects of multi-channel audio communication in a SLIMbus system that include specific aspects of the present disclosure, a brief overview of a SLIMbus system according to the MIPI® Alliance SLIMbus® specification version 1.1, published on September 28, 2012 (hereinafter "SLIMbus specification") is provided with reference to Figure 1. An illustration of a SLIMbus system configured according to the SLIMbus specification to support stereo audio playback in a SLIMbus-capable electronic device is then discussed with reference to Figures 2A and 2B. The discussion of specific exemplary aspects of multi-channel audio communication in a SLIMbus system starts with reference to Figure 3.

In this regard, Figure 1 is a schematic diagram illustrating device communications in an exemplary SLIMbus system 100 according to the SLIMbus specification. With reference to Figure 1, the SLIMbus system 100 may include a first device 102, a second device 104, a third device 106, a fourth device 108, a fifth device 110, and a sixth device 112 (collectively, SLIMbus devices 114). The SLIMbus devices 114 are configured to communicate over a shared bus 116, which is a time division multiplexed (TDM) bus (hereinafter referred to as the "TDM bus 116"). According to the SLIMbus specification, each of the SLIMbus devices 114 is a separately addressable entity within a SLIMbus component (not shown) that contains the necessary logic to enable each of the SLIMbus devices 114 to access the TDM bus 116. In a non-limiting example, the SLIMbus devices 114 may be application processors, storage media, modems, microphones, speakers, and so on.

With continuing reference to Figure 1, each of the SLIMbus devices 114 comprises a plurality of ports 118(1)-118(N). According to the SLIMbus specification, each of the SLIMbus devices 114 may support up to sixty-four (64) ports. Each of the plurality of ports 118(1)-118(N) contains the necessary parameters (e.g., connection status, channel number, transport protocol used, and relevant data channel parameters) for any of the SLIMbus devices 114 to connect (as that term is used in the SLIMbus specification) to a data channel. Data channels provide logical associations between a SLIMbus source device (e.g., the first device 102) and a SLIMbus sink device (e.g., the second device 104 or the sixth device 112), thus allowing audio data to be distributed from the SLIMbus source device to the associated SLIMbus sink device. As illustrated in Figure 1, a first data channel 120(1) provides logical association between port 118(N) in the first device 102 and port 118(X) in the second device 104. A second data channel 120(2) provides logical association between port 118(1) in the first device 102 and port 118(N) in the sixth device 112. Using an example of a stereo system, the second device 104 may be the left speaker and the sixth device 112 may be the right speaker, such that the first data channel 120(1) carries the information for the left audio channel and the second data channel 120(2) carries the information for the right audio channel.

Further, according to the SLIMbus specification, the port 118(1) and the port 118(N) in the first device 102, the port 118(X) in the second device 104, and the port 118(N) in the sixth device 112 can only support a single data channel such as the data channel 120(1) or 120(2). The data channels 120(1) and 120(2) between the SLIMbus devices 114 are supported physically by the TDM bus 116. The TDM bus 116 is a physical communication medium that carries audio data from the port 118(N) in the first device 102 to the port 118(X) in the second device 104 based on the logical association provided by the first data channel 120(1). Likewise, the TDM bus 116 carries audio data from the port 118(1) in the first device 102 to the port 118(N) in the sixth device 112 based on the logical association provided by the second data channel 120(2).

Figure 2A is a simplified schematic diagram of an exemplary electronic device 200 configured to play stereo audio from a storage device 202 to a left speaker 204 and a right speaker 206. With reference to Figure 2A, an audio controller 208 may be configured by a music-playing application to play an audio file, for example a motion picture expert group version 3 (MP3) file, from the storage device 202 to the left speaker 204 and the right speaker 206. Audio data in the audio file is typically organized and stored in the form of data blocks (hereinafter referred to as audio segments). When the audio file is played, the audio controller 208 receives a compressed and encoded audio file210 from the storage device 202. The compressed and encoded audio file 210 includes a multichannel audio stream (e.g., a stereo audio file including a left channel and a right channel, the channels designed to flow together to speakers to render a performance as originally recorded). The audio controller 208 decodes and decompresses the compressed and encoded audio file 210 and sends a decoded and decompressed audio file 210' containing the multichannel audio stream to the TDM bus 116. Individual audio channels 212L (i.e., the left audio channel) and 214R (i.e., the right audio channel) in the multichannel audio stream of the decoded and decompressed audio file 210' are provided to the individual left speaker 204 and right speaker 206. In a non-limiting example, the audio controller 208 may be seen as the first device 102 of Figure 1. The left speaker 204 and the right speaker 206 may be seen as the second device 104 and the sixth device 112, respectively. Like the first device 102, the second device 104, and the sixth device 112, the audio controller 208, the left speaker 204, and the right speaker 206 are interconnected via the TDM bus 116. As such, the electronic device 200 is an example of the SLIMbus system 100 of Figure 1.

Figure 2B is a more detailed schematic diagram of an exemplary SLIMbus system 216 configured according to the SLIMbus specification to support stereo audio playback in the electronic device 200 of Figure 2A. Common elements between Figures 2A and 2B are shown therein with common element numbers and will not be re-described herein.

With reference to Figure 2B, the audio controller 208, after decompressing and decoding the compressed and encoded audio file 210, has audio stream 218, which contains multiple audio channels (e.g., the left and right audio channels for a stereo audio file). The audio controller 208 includes a first data pipe 220 and a second data pipe 222, which may be direct memory access (DMA) pipes. The first data pipe 220 receives a subset of the audio stream 218, and the second data pipe 222 receives a different subset of the audio stream 218. The first data pipe 220 is coupled to a first port 224. The second data pipe 222 is coupled to a second port 226. The first port 224 contains a first output queue 228 and the second port 226 contains a second output queue 230. The first output queue 228 and the second output queue 230 may be first-in, first-out (FIFO) queues.

With continued reference to Figure 2B, the first port 224 connects to data channel 232L. A port 234 in the left speaker 204 also connects to the data channel 232L. Likewise, the second port 226 connects to data channel 236R, and a port 238 in the right speaker 206 connects to the data channel 236R. The data channel 232L carries the data for the left audio channel 212L and the data channel 236R carries the data for the right audio channel 214R. The port 234 may contain an input queue 240 and the port 238 may contain an input queue 242. The input queues 240 and 242 may be FIFO queues. In this regard, the SLIMbus system 216 plays the audio on the left speaker 204 and the right speaker 206 concurrently to render the stereo audio playback in the electronic device 200 of Figure 2A.

With continued reference to Figure 2B, the data channels 232L and 236R are logical channels within the TDM bus 116. According to the SLIMbus specification, each data channel requires a unique port. Thus, the audio controller 208 must use the first port 224 and the second port 226 to support the data channels 232L and 236R respectively. It should be appreciated that the first data pipe 220 and the second data pipe 222 may each have a respective

data bandwidth that may be more than what is needed to transport the data destined for the data channel 232L and the data channel 236R. However, according to the SLIMbus specification, the first port 224 must occupy the first data pipe 220 exclusively. Likewise, the second port 226 must occupy the second data pipe 222 exclusively. As such, the respective data bandwidth of the first data pipe 220 and the second data pipe 222 may be underutilized. In this regard, exemplary aspects of the present disclosure allow the data channels 232L and 236R to be supported from a single port using a single data pipe, thus improving implementation flexibilities and efficiencies of the stereo audio playback in the electronic device 200. While a single data pipe is contemplated, the disclosure is not so limited and multiple data pipes may still be used in association with a port that connects to multiple data channels.

In this regard, Figure 3 is a schematic diagram of an exemplary SLIMbus system 300 configured to support stereo audio playback by configuring at least one port among a plurality of ports 302(1)-302(M) in an audio controller 304 to function as a multi-channel output port 302(X).

With reference to Figure 3, the multi-channel output port 302(X) receives interleaved data 306 from an interleaved data pipe 308. In a non-limiting example, the interleaved data pipe 308 is a DMA pipe. The interleaved data 306 includes left audio data 310 for the left audio channel and right audio data 312 for the right audio channel. The multi-channel output port 302(X) includes an interleaved output queue 314 that stores the interleaved data 306. The multi-channel output port 302(X) connects to a first data channel 316L and a second data channel 318R. A TDM bus 320 carries the left audio data 310 in the first data channel 316L and the right audio data 312 in the second data channel 318R, respectively.

With continued reference to Figure 3, the port 234 of the left speaker 204 connects to the first data channel 316L, and the port 238 of the right speaker 206 connects to the second data channel 318R. By configuring the multi-channel output port 302(X) to support both the first data channel 316L and the second data channel 318R, only a single interleaved data pipe such as the interleaved data pipe 308 is required, thus making the SLIMbus system 300 more efficient than the SLIMbus system 216 of Figure 2B. Note that it is possible to use the multi-channel output port 302(X) with multiple data pipes, but much of the efficiency generated by the multi-channel output port 302(X) is vitiated.

With continuing reference to Figure 3, the multi-channel output port 302(X) can be configured to support the first data channel 316L and the second data channel 318R using commands defined in the SLIMbus specification. An example is provided in Table 1 below based on, for the sake of the example, assuming that the first data channel 316L is assigned a respective channel number (CN) of zero (0) and the second data channel 318R is assigned a respective CN of one (1), and further assuming that the multi-channel output port 302(X), the port 234, and the port 238 are assigned a port number (PN) of one (1), two (2), and three (3), respectively. Based on these assumptions, an exemplary command sequence for configuring the SLIMbus system 300 is provided in Table 1 below.

**Table 1**

| **Command** | **Command Parameters** | **Remarks** |
|---|---|---|
| CONNECT_SOURCE | CN: 0, PN: 1 | Connect the first data channel 316L (CN: 0) to the multi-channel output port 302(X) (PN: 1) in the audio controller 304 |
| CONNECT_SINK | CN: 0, PN: 2 | Connect the first data channel 316L (CN: 0) to the port 234 (PN: 2) in the left speaker 204 |
| CONNECT_SOURCE | CN: 1, PN: 1 | Connect the second data channel 318R (CN: 1) to the multi-channel output port 302(X) (PN: 1) in the audio controller 304 |
| CONNECT_SINK | CN: 1, PN: 3 | Connect the second data channel 318R (CN: 1) to the port 238 (PN: 3) in the right speaker 206 |
| BEGIN_RECONFIGURATION | | |
| NEXT_DEFINE_CHANNEL | CN: 0, SD, TP, SL | Configure the first data channel 316L with segment distribution (SD), transport protocol (TP), and segment length (SL) parameters |
| NEXT_DEFINE CONTENT | CN: 0, FL, PR, AF, DT, CL, DL | Configure usage of the first data channel 316L with frequency lock bit (FL), presence rate (PR), auxiliary bit format (AF), data type (DT), channel link bit (CL), and data length (DL) parameters |
| NEXT_DEFINE_CHANNEL | CN: 1, SD, TP, SL | Configure the second data channel 318R with SD, TP, and SL parameters |
| NEXT_DEFINE_CONTENT | CN: 1, FL, PR, AF, DT, CL, DL | Configure usage of the second data channel 318R with FL, PR, AF, DT, CL, and DL parameters |
| NEXT_ACTIVE_CHANNEL | CN: 0 | Switch to the first data channel 316L |
| NEXT_ACTIVE_CHANNEL | CN: 1 | Switch to the second data channel 318R |
| RECONFIGURE_NOW | | |

With continuing reference to Figure 3, the multi-channel output port 302(X) may be reconfigured from supporting the first data channel 316L and the second data channel 318R to supporting only the first data channel 316L. The reconfiguration may be performed using the commands defined in the SLIMbus specification. An exemplary command sequence for reconfiguring the SLIMbus system 300 to deactivate the second data channel 318R is provided in Table 2 below.

**Table 2**

| **Command** | **Command Parameters** | **Remarks** |
|---|---|---|
| NEXT_DEACTIVATE_CHANNEL | CN: 1 | Deactivate the second data channel 318R (CN: 1) |
| RECONFIGURE_NOW | | |

After the second data channel 318R is deactivated, the multi-channel output port 302(X) behaves like a traditional system with a single data channel. As a result, the interleaved output queue 314 contains only the left audio data 310.

With continuing reference to Figure 3, it is also possible to terminate both the first data channel 316L and the second data channel 318R concurrently using the commands defined in the SLIMbus specification. An exemplary command sequence for reconfiguring the SLIMbus system 300 to deactivate both the first data channel 316L and the second data channel 318R is provided in Table 3 below.

**Table 3**

| **Command** | **Command Parameters** | **Remarks** |
|---|---|---|
| NEXT_DEACTIVATE_CHANNEL | CN: 0 | Deactivate the first data channel 316L (CN: 0) |
| NEXT_DEACTIVATE_CHANNEL | CN: 1 | Deactivate the second data channel 318R (CN: 1) |
| RECONFIGURE_NOW | | |

After deactivating the first data channel 316L and the second data channel 318R, the multi-channel output port 302(X) is no longer connected to a data channel. As a result, the interleaved output queue 314 becomes empty.

In an exemplary aspect, each data channel has an identical sample interval (SI (rate, e.g., 48 kHz or 96 kHz)) and segment length (SL, i.e., how many bits are in each transaction), but different segment offsets (SO). In another exemplary aspect, the SI may be different between two channels, in which case, the greatest common divider for the SIs shall be the smallest SI. A ValueElement capability may be set for a particular device indicating how many channels may be assigned to each port. This capability may be stored in a register and may be provided to a master device by polling, or automatically, when a device is associated with a SLIMbus system.

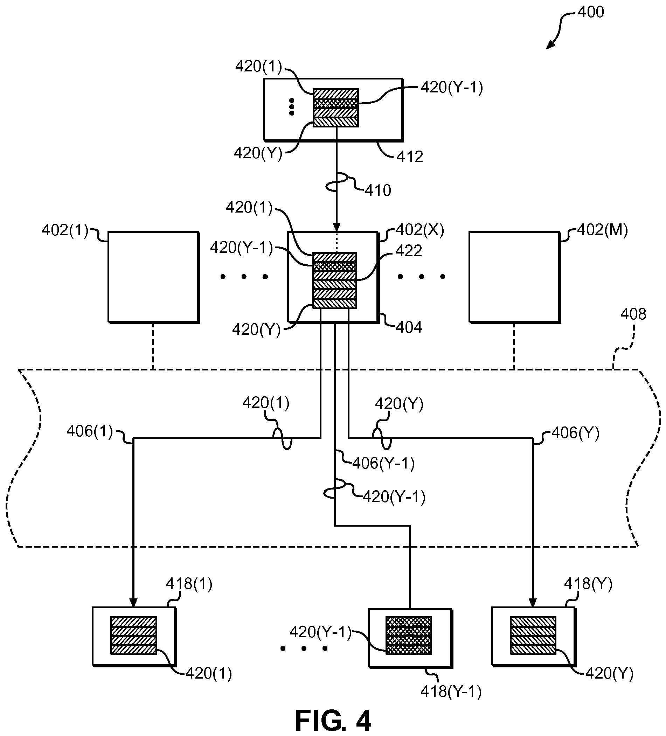

Although the multi-channel output port 302(X) is shown in Figure 3 to support only the first data channel 316L and the second data channel 318R, it is possible to configure any of the plurality of ports 302(1)-302(M) to support more than two data channels (e.g., instead of stereo, 5.1, 6.1 or other channel arrangements are possible). In this regard, Figure 4 is a schematic diagram of an exemplary SLIMbus system 400 in which at least one port 402(X) among a plurality of ports 402(1)-402(M) is configured as a multi-channel output port 404 to support a plurality of data channels 406(1)-406(Y).

With reference to Figure 4, the plurality of ports 402(1)-402(M) is communicatively coupled to a shared bus 408. In a non-limiting example, the shared bus 408 is a TDM bus. In this regard, the shared bus 408 is the physical communication medium that supports the plurality of data channels 406(1)-406(Y). The multi-channel output port 404 receives interleaved data 410 from an interleaved data pipe 412. In a non-limiting example, the interleaved data pipe 412 is a DMA pipe.

With continuing reference to Figure 4, the interleaved data 410 includes audio data 420(1)-420(Y) corresponding to individual audio channels. For example, audio data 420(1) may be a left channel, 420(Y-1) may be a subwoofer channel, and 420(Y) may be a right channel. The multi-channel output port 404 distributes the audio data 420(1)-420(Y) over the plurality of data channels 406(1)-406(Y), respectively. In this regard, the plurality of data channels 406(1)-406(Y) may be unidirectional output channels that carry the audio data 420(1)-420(Y) from the multi-channel output port 404 to a plurality of receiving ports 418(1)-418(Y), respectively. The plurality of receiving ports 418(1)-418(Y) is also communicatively coupled to the shared bus 408. Since the shared bus 408 is the physical communication medium supporting the plurality of data channels 406(1)-406(Y), the audio data 420(1)-420(Y) is transported physically from the multi-channel output port 404 to the plurality of receiving ports 418(1)-418(Y) over the shared bus 408.

With continuing reference to Figure 4, the multi-channel output port 404 stores the audio data 420(1)-420(Y) in the interleaved data 410 in a FIFO queue 422.

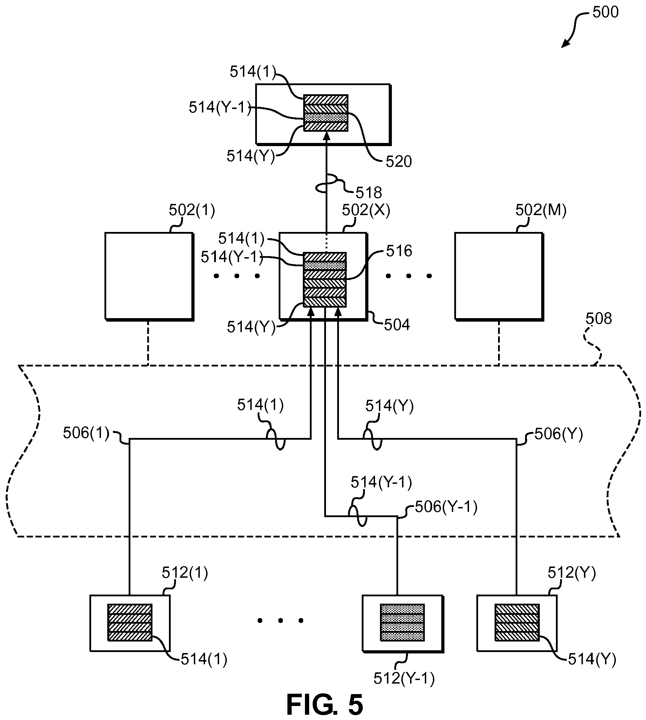

A port may be configured to receive multi-channel audio as well. In this regard, Figure 5 is a schematic diagram of an exemplary SLIMbus system 500 in which at least one port 502(X) among a plurality of ports 502(1)-502(M) is configured as a multi-channel input port 504 to support a plurality of data channels 506(1)-506(Y).

With reference to Figure 5, the plurality of ports 502(1)-502(M) is communicatively coupled to a shared bus 508. In a non-limiting example, the shared bus 508 is a TDM bus. In this regard, the shared bus 508 is the physical communication medium that supports the plurality of data channels 506(1)-506(Y). The multi-channel input port 504 receives audio data 514(1)-514(Y) over the plurality of data channels 506(1)-506(Y), respectively. The audio data 514(1)-514(Y) is received by the multi-channel input port 504 from a plurality of distributing ports 512(1)-512(Y) that is also communicatively coupled to the shared bus 508. In this regard, the plurality of data channels 506(1)-506(Y) may be unidirectional input channels that carry the audio data 514(1)-514(Y) to the multi-channel input port 504. Since the shared bus 508 is the physical communication medium supporting the plurality of data channels 506(1)-506(Y), the audio data 514(1)-514(Y) is transported physically over the shared bus 508.

With continuing reference to Figure 5, the multi-channel input port 504 stores the audio data 514(1)-514(Y) in a FIFO queue 516. The multi-channel input port 504 stores the audio data 514(1)-514(Y) in the FIFO queue 516 in an interleaving fashion.

With continuing reference to Figure 5, the multi-channel input port 504 converts the interleaved audio data 514(1)-514(Y) stored in the FIFO queue 516 to an interleaved audio stream 518. With continuing reference to Figure 5, the multi-channel input port 504 provides the interleaved audio stream 518 to an interleaved data pipe 520. In a non-limiting example, the interleaved data pipe 520 is a DMA pipe.

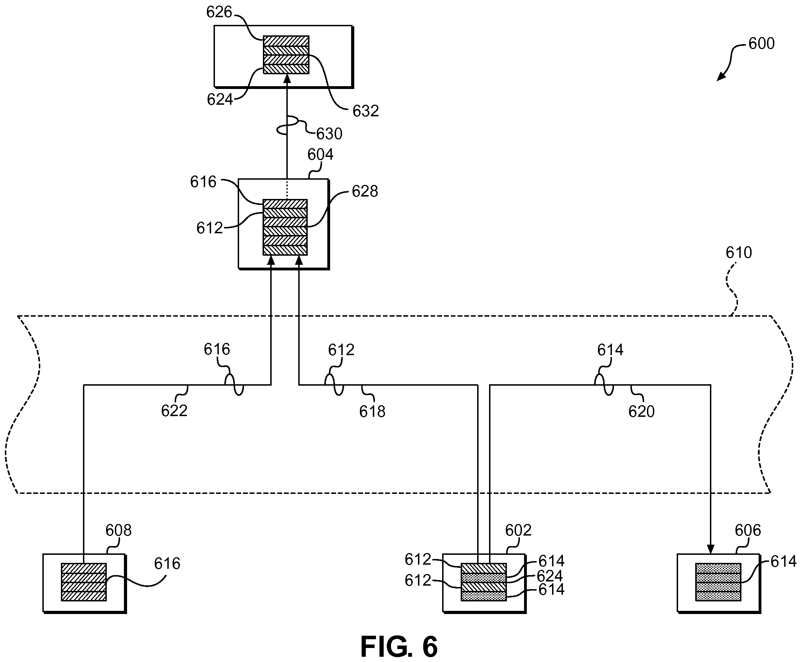

The multi-channel output port 404 of Figure 4 and the multi-channel input port 504 of Figure 5 may co-exist in the same SLIMbus system. In this regard, Figure 6 is a schematic diagram of an exemplary SLIMbus system 600 including a multi-channel output port 602 and a multi-channel input port 604.

With reference to Figure 6, the SLIMbus system 600 also comprises a receiving port 606 and a distributing port 608. The multi-channel output port 602, the multi-channel input port 604, the receiving port 606, and the distributing port 608 are all communicatively coupled to a shared bus 610. In a non-limiting example, the shared bus 610 may be a TDM bus. The multi-channel output port 602 distributes first audio data 612 and second audio data 614 to the multi-channel input port 604 and the receiving port 606, respectively. The distributing port 608 distributes third audio data 616 to the multi-channel input port 604. The first audio data 612, the second audio data 614, and the third audio data 616 are carried over a first data channel 618, a second data channel 620, and a third data channel 622, respectively. Note that in a further aspect of the present disclosure, the first audio data 612 and the second audio data 614 may be identical, but carried on the two data channels 618 and 620. Still further, in another non-limiting aspect of the present disclosure, if the first audio data 612 and the second audio data 614 are identical, the audio data may be carried on the same data channel (not illustrated). Such arrangement where the identical audio data is carried on a single channel will save communication bandwidth.
With continuing reference to Figure 6, the multi-channel input port 604 stores the audio data 612 and 616 in a FIFO queue 628. The multi-channel input port 604 generates interleaved audio data 630 in the FIFO queue 628. The multi-channel input port 604 provides the interleaved audio data 630 to an interleaved data pipe 632. In a non-limiting example, the interleaved data pipe 632 is a DMA pipe.

The SLIMbus systems 300, 400, 500, and 600 of Figures 3, 4, 5, and 6 may be provided in or integrated into any processor-based device. Examples, without limitation, include a set top box, an entertainment unit, a navigation device, a communications device, a fixed location data unit, a mobile location data unit, a mobile phone, a cellular phone, a smartphone, a tablet, a phablet, a computer, a portable computer, a desktop computer, a personal digital assistant (PDA), a monitor, a computer monitor, a television, a tuner, a radio, a satellite radio, a music player, a digital music player, a portable music player, a digital video player, a video player, a digital video disc (DVD) player, a portable digital video player, and an automobile.

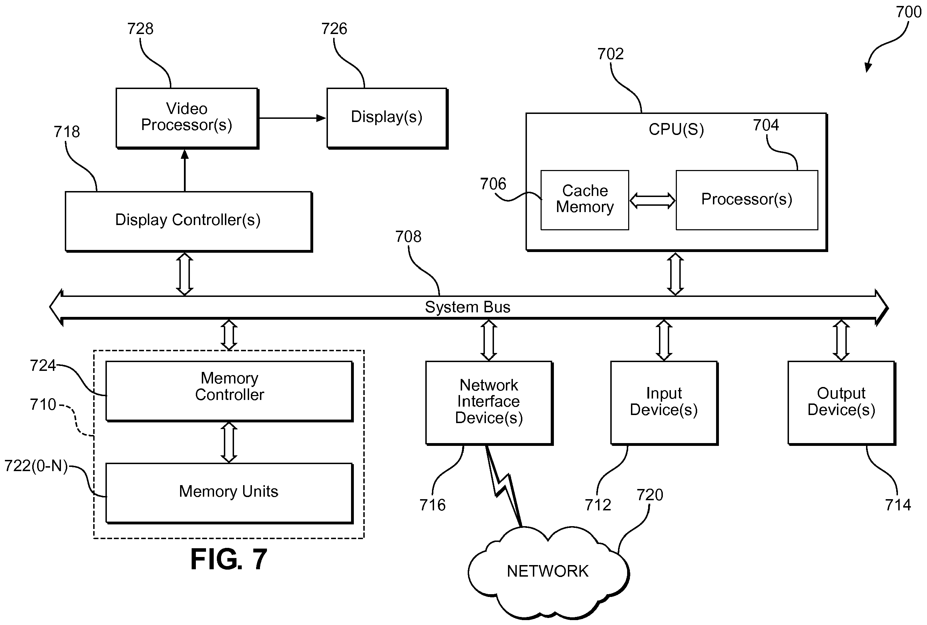

In this regard, Figure 7 illustrates an example of a processor-based system 700 that can employ the SLIMbus systems 300, 400, 500, and 600 of Figures 3, 4, 5, and 6. In this example, the processor-based system 700 includes one or more central processing units (CPUs) 702, each including one or more processors 704. The CPU(s) 702 may have cache memory 706 coupled to the processor(s) 704 for rapid access to temporarily stored data. The CPU(s) 702 is coupled to a system bus 708. As is well known, the CPU(s) 702 communicates with these other devices by exchanging address, control, and data information over the system bus 708. Although not illustrated in Figure 7, multiple system buses 708 could be provided, wherein each system bus 708 constitutes a different fabric. In this regard, in a non-limiting example, the multi-channel output port 302(X) of Figure 3, the multi-channel output port 404 of Figure 4, the multi-channel input port 504 of Figure 5, as well as the multi-channel output port 602 and the multi-channel input port 604 of Figure 6 can be communicatively coupled to the system bus 708.

Other master and slave devices can be connected to the system bus 708. As illustrated in Figure 7, these devices can include a memory system 710, one or more input devices 712, one or more output devices 714, one or more network interface devices 716, and one or more display controllers 718, as examples. The input device(s) 712 can include any type of input device, including, but not limited to, input keys, switches, voice processors, etc. The output device(s) 714 can include any type of output device, including, but not limited to, audio, video, other visual indicators, etc. The network interface device(s) 716 can be any device configured to allow exchange of data to and from a network 720. The network 720 can be any type of network, including, but not limited to, a wired or wireless network, a private or public network, a local area network (LAN), a wireless local area network (WLAN), a wide area network (WAN), a BLUETOOTH™ network, or the Internet. The network interface device(s) 716 can be configured to support any type of communications protocol desired. The memory system 710 can include one or more memory units 722(0-N) and a memory controller 724.

The CPU(s) 702 may also be configured to access the display controller(s) 718 over the system bus 708 to control information sent to one or more displays 726. The display controller(s) 718 sends information to the display(s) 726 to be displayed via one or more video processors 728, which process the information to be displayed into a format suitable for the display(s) 726. The display(s) 726 can include any type of display, including, but not limited to, a cathode ray tube (CRT), a liquid crystal display (LCD), a plasma display, a light emitting diode (LED) display, etc.

Those of skill in the art will further appreciate that the various illustrative logical blocks, modules, circuits, and algorithms described in connection with the aspects disclosed herein may be implemented as electronic hardware, instructions stored in memory or in another computer readable medium and executed by a processor or other processing device, or combinations of both. The master devices and slave devices described herein may be employed in any circuit, hardware component, integrated circuit (IC), or IC chip, as examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices (e.g., a combination of a DSP and a microprocessor, a plurality of microprocessors, one or more microprocessors in conjunction with a DSP core, or any other such configuration).

The aspects disclosed herein may be embodied in hardware and in instructions that are stored in hardware, and may reside, for example, in RAM, flash memory, ROM, Electrically Programmable ROM (EPROM), Electrically Erasable Programmable ROM (EEPROM), registers, a hard disk, a removable disk, a CD-ROM, or any other form of computer readable medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary aspects herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary aspects may be combined. Those of skill in the art will also understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

## Claims

1. An audio source comprising:
a multi-channel output port (302(X)) configured to be coupled to a time division multiplex, TDM, bus (320) comprising a Serial Low-Power Inter-Chip Media Bus, SLIMbus, wherein the multi-channel output port is configured to concurrently connect to at least two data channels (316L, 318R) carried by the TDM bus; and
a data pipe (308) coupled to the multi-channel output port and configured to pass interleaved audio data (306) to the multi-channel output port.

2. The audio source of claim 1, further comprising an output buffer associated with the multi-channel output port, wherein the output buffer comprises a first-in, first-out, FIFO, register.

3. The audio source of claim 1, wherein the data pipe comprises a direct memory access, DMA, pipe.

4. The audio source of claim 3, wherein the DMA pipe comprises only a single DMA pipe.

5. The audio source of claim 1, further comprising respective output buffers, one each for each of the at least two data channels, wherein the respective output buffers comprise first-in, first-out, FIFO, registers.

6. The audio source of claim 5, further comprising respective data pipes, one each for each of the respective output buffers.

7. The audio source of claim 6, wherein the respective data pipes comprise direct memory access, DMA, pipes.

8. An audio sink comprising:
a multi-channel input port (504) configured to be coupled to a time division multiplex, TDM, bus (508) comprising a Serial Low-Power Inter-Chip Media Bus, SLIMbus, wherein the multi-channel input port is configured to concurrently connect to at least two data channels carried by the TDM bus; and
a data pipe (520) coupled to the multi-channel input port and configured to receive interleaved audio data from the multi-channel input port.

9. The audio sink of claim 8, further comprising an input buffer associated with the multi-channel input port, wherein the input buffer comprises a first-in, first-out (FIFO) register.

10. The audio sink of claim 8, wherein the data pipe comprises a direct memory access, DMA, pipe.

11. The audio sink of claim 10, wherein the DMA pipe comprises only a single DMA pipe.

12. The audio sink of claim 8, further comprising respective input buffers, one each for each of the at least two data channels, wherein the respective input buffers comprise first-in, first-out, FIFO, registers.

13. The audio sink of claim 12, further comprising respective data pipes, one each for each of the respective input buffers.

14. A method of controlling an audio source, comprising:
connecting a multi-channel output port to at least two data channels in a time division multiplex (TDM) bus comprising a Serial Low-Power Inter-Chip Media Bus (SLIMbus);
receiving interleaved audio data at the multi-channel output port from a data pipe, wherein the interleaved audio data comprises multiple audio channels at the multi-channel output port; and
transmitting the multiple audio channels concurrently through the at least two data channels in the TDM bus from the multi-channel output port.

15. A method of controlling an audio sink, comprising:
connecting a multi-channel input port to at least two data channels in a time division multiplex (TDM) bus comprising a Serial Low-Power Inter-Chip Media Bus (SLIMbus);
receiving multiple audio channels concurrently through the at least two data channels in the TDM bus at the multi-channel input port;
interleaving audio data in the multi-channel input port; and
passing the interleaved audio data to a data pipe.

## Patentansprüche

1. Eine Audioquelle, die Folgendes aufweist:
einen Mehrkanalausgangsanschluss bzw. -Port (302(X)), der konfiguriert ist, an einen Zeitmultiplex- bzw. TDM-Bus (TDM = time division multiplex) (320) gekoppelt zu werden, der einen seriellen Niedrigleistungs-Inter-Chip-Medienbus bzw. SLIMbus (SLIMbus = Serial Low-Power Inter-Chip Media Bus) aufweist, wobei der Mehrkanalausgangs-Port konfiguriert ist gleichzeitig mit wenigstens zwei Datenkanälen (316L, 318R) verbunden zu sein, die durch den TDM-Bus getragen werden; und
eine Datenleitung bzw. Daten-Pipe (308), die an den Mehrkanalausgangs-Port gekoppelt ist und konfiguriert ist zum Weiterleiten von verschachtelten Audiodaten (306) an den Mehrkanalausgangs-Port.

2. Audioquelle nach Anspruch 1, die weiter einen Ausgangspuffer aufweist, der mit dem Mehrkanalausgangs-Port assoziiert ist, wobei der Ausgangspuffer ein First-In-First-Out- bzw. FIFO-Register aufweist.

3. Audioquelle nach Anspruch 1, wobei die Datenleitung eine Direktspeicherzugriffs- bzw. DMA-Leitung (DMA = direct memory access) aufweist.

4. Audioquelle nach Anspruch 3, wobei die DMA-Leitung nur eine einzelne DMA-Leitung aufweist.

5. Audioquelle nach Anspruch 1, die jeweilige Ausgangspuffer aufweist, und zwar jeweils einen für jeden der wenigstens zwei Datenkanäle, wobei die jeweiligen Ausgangspuffer First-In-First-Out- bzw. FIFO-Register aufweisen.

6. Audioquelle nach Anspruch 5, die weiter jeweilige Datenleitungen aufweist, und zwar jeweils eine für jeden der jeweiligen Ausgangspuffer.

7. Audioquelle nach Anspruch 6, wobei die jeweiligen Datenleitungen Direktspeicherzugriffs- bzw. DMA-Leitungen aufweisen.

8. Eine Audiosenke, die Folgendes aufweist:
einen Mehrkanaleingangsanschluss bzw. -Port (504), der konfiguriert ist, an einen Zeitmultiplex- bzw. TDM-Bus (TDM = time division multiplex) (508) gekoppelt zu werden, der einen seriellen Niedrigleistungs-Inter-Chip-Medienbus bzw. SLIMbus (SLIMbus = Serial Low-Power Inter-Chip Media Bus) aufweist, wobei der Mehrkanaleingangs-Port konfiguriert ist gleichzeitig mit wenigstens zwei Datenkanälen verbunden zu sein, die durch den TDM-Bus getragen werden; und
eine Datenleitung bzw. -Pipe (520), die an den Mehrkanaleingangs-Port gekoppelt ist und konfiguriert ist zum Empfangen von verschachtelten Audiodaten von dem Mehrkanaleingangs-Port.

9. Audiosenke nach Anspruch 8, die weiter einen Eingangspuffer aufweist, der mit dem Mehrkanaleingangs-Port assoziiert ist, wobei der Eingangspuffer ein First-In-First-Out- bzw. FIFO-Register aufweist.

10. Audiosenke nach Anspruch 8, wobei die Datenleitung eine Direktspeicherzugriffs- bzw. DMA-Leitung aufweist.

11. Audiosenke nach Anspruch 10, wobei die DMA-Leitung nur eine einzelne DMA-Leitung aufweist.

12. Audiosenke nach Anspruch 8, die weiter jeweilige Eingangspuffer aufweist, und zwar jeweils einen für jeden der wenigstens zwei Datenkanäle, wobei die jeweiligen Eingangspuffer First-In-First-Out- bzw. FIFO-Register aufweisen.

13. Audiosenke nach Anspruch 12, die weiter jeweilige Datenleitungen aufweist, und zwar jeweils eine für jeden der jeweiligen Eingangspuffer.

14. Ein Verfahren zum Steuern einer Audioquelle, das Folgendes aufweist:
Verbinden eines Mehrkanalausgangsanschlusses bzw. -Ports mit wenigstens zwei Datenkanälen in einem Zeitmultiplex- bzw. TDM-Bus (TDM = time division multiplex), der einen seriellen Niedrigleistungs-Inter-Chip-Medienbus bzw. SLIMbus (SLIMbus = Serial Low-Power Inter-Chip Media Bus) aufweist;
Empfangen von verschachtelten Audiodaten an dem Mehrkanalausgangs-Port von einer Datenleitung, wobei die verschachtelten Audiodaten mehrere Audiokanäle an den Mehrkanalausgangs-Port aufweisen; und
Senden der mehreren Audiokanäle gleichzeitig durch die wenigstens zwei Datenkanäle in dem TDM-Bus von dem Mehrkanalausgangs-Port.

15. Ein Verfahren zum Steuern einer Audiosenke, das Folgendes aufweist:
Verbinden eines Mehrkanaleingangsanschlusses bzw. -Ports mit wenigstens zwei Datenkanälen in einem Zeitmultiplex- bzw. TDM-Bus (TDM = time division multiplex), der einen seriellen Niedrigleistungs-Inter-Chip-Medienbus bzw. SLIMbus (SLIMbus = Serial Low-Power Inter-Chip Media Bus) aufweist;
Empfangen mehrerer Audiokanäle gleichzeitig durch die wenigstens zwei Datenkanäle in dem TDM-Bus an dem Mehrkanaleingangs-Port; und
Verschachteln von Audiodaten in dem Mehrkanaleingangs-Port; und
Weiterleiten der verschachtelten Audiodaten an eine Datenleitung.

## Revendications

1. Une source audio comprenant :
un port de sortie multicanal (302 (X)) configuré pour être couplé à un bus à multiplexage par répartition dans le temps, TDM, (320) comprenant un bus multimédia inter-puce série de faible puissance, SLIMbus, dans lequel le port de sortie multicanal est configuré pour se connecter de façon concurrente à au moins deux canaux de données (316L, 318R) supportés par le bus TDM, et
un conduit de données (308) couplé au port de sortie multicanal et configuré pour transférer des données audio entrelacées (306) au port de sortie multicanal.

2. Source audio selon la revendication 1, comprenant en outre une mémoire tampon de sortie associée au port de sortie multicanal, dans lequel la mémoire tampon de sortie comprend un registre premier entré, premier sorti, FIFO.

3. Source audio selon la revendication 1, dans laquelle le conduit de données comprend un conduit d'accès direct à la mémoire, DMA.

4. Source audio selon la revendication 3, dans laquelle le conduit DMA ne comprend qu'un seul conduit DMA.

5. Source audio selon la revendication 1, comprenant en outre des mémoires tampon de sortie respectives, chacune pour chacun des au moins deux canaux de données, dans lequel les mémoires tampon de sortie respectives comprennent des registres premier entré, premier sorti, FIFO.

6. Source audio selon la revendication 5, comprenant en outre des conduits de données respectifs, chacun pour chacune des mémoires tampon de sortie respectives.

7. Source audio selon la revendication 6, dans laquelle les conduits de données respectifs comprennent des conduits d'accès direct à la mémoire, DMA.

8. Bloc récepteur audio comprenant :
un port d'entrée multicanal (504) configuré pour être couplé à un bus à multiplexage par répartition dans le temps, TDM, (508) comprenant un bus multimédia inter-puce série de faible puissance, SLIMbus, dans lequel le port d'entrée multicanal est configuré pour se connecter de façon concurrente à au moins deux canaux de données supportés par le bus TDM, et
un conduit de données (520) couplé au port d'entrée multicanal et configuré pour recevoir des données audio entrelacées à partir du port d'entrée multicanal.

9. Bloc récepteur audio selon la revendication 8, comprenant en outre une mémoire tampon d'entrée associée au port d'entrée multicanal, dans lequel la mémoire tampon d'entrée comprend un registre premier entré, premier sorti (FIFO).

10. Bloc récepteur audio selon la revendication 8, dans lequel le conduit de données comprend un conduit d'accès direct à la mémoire, DMA.

11. Bloc récepteur audio selon la revendication 10, dans lequel le conduit DMA ne comprend qu'un seul conduit DMA.

12. Bloc récepteur audio selon la revendication 8, comprenant en outre des mémoires tampon d'entrée respectives, chacune pour chacun des au moins deux canaux de données, dans lequel les mémoires tampon d'entrée respectives comprennent des registres premier entré, premier sorti, FIFO.

13. Bloc récepteur audio selon la revendication 12, comprenant en outre des conduits de données respectifs, un pour chacun des mémoires tampon d'entrée respectives.

14. Procédé de commande d'une source audio, comprenant les étapes consistant à :
connecter un port de sortie multicanal à au moins deux canaux de données dans un bus à multiplexage par répartition dans le temps (TDM) comprenant un bus multimédia inter-puce série de faible puissance (SLIMbus) ;
recevoir des données audio entrelacées au port de sortie multicanal à partir d'un conduit de données, dans lequel les données audio entrelacées comprennent des canaux audio multiples au niveau du port de sortie multicanal ; et
transmettre les multiples canaux audio de façon concurrente à travers les au moins deux canaux de données dans le bus TDM à partir du port de sortie multicanal.

15. Procédé de commande d'un bloc récepteur audio, comprenant les étapes consistant à :
connecter un port d'entrée multicanal à au moins deux canaux de données dans un bus à multiplexage par répartition dans le temps (TDM) comprenant un bus multimédia inter-puce série de faible puissance (SLIMbus) ;
recevoir des canaux audio multiples de façon concurrente à travers les au moins deux canaux de données dans le bus TDM au niveau du port d'entrée multicanal ;
entrelacer les données audio au niveau du port d'entrée multicanal ; et
passer les données audio entrelacées à un conduit de données.
